(19)

Europäisches
Patentamt
European
Patent Office
Office européen
des brevets

(11) **EP 4 383 391 A1**

(12) **EUROPEAN PATENT APPLICATION**
published in accordance with Art. 153(4) EPC

(43) Date of publication:
**12.06.2024 Bulletin 2024/24**

(21) Application number: **22953361.7**

(22) Date of filing: **30.12.2022**

(51) International Patent Classification (IPC):
**H01M 10/0525** $^{(2010.01)}$     **H01M 10/058** $^{(2010.01)}$
**H01M 4/13** $^{(2010.01)}$

(52) Cooperative Patent Classification (CPC):
Y02E 60/10

(86) International application number:
**PCT/CN2022/144292**

(87) International publication number:
**WO 2024/087389 (02.05.2024 Gazette 2024/18)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **27.10.2022 CN 202211327756**

(71) Applicant: **Sunwoda Mobility Energy Technology
Co., Ltd.
Shenzhen, Guangdong 518107 (CN)**

(72) Inventors:
• ZHANG, Yao
  Shenzhen, Guangdong 518107 (CN)
• WANG, Mingwang
  Shenzhen, Guangdong 518107 (CN)
• ZHANG, Xuhui
  Shenzhen, Guangdong 518107 (CN)
• WANG, Baoyu
  Shenzhen, Guangdong 518107 (CN)
• CHEN, Hui
  Shenzhen, Guangdong 518107 (CN)

(74) Representative: **Herrero & Asociados, S.L.
Edificio Aqua - Agustín de Foxá, 4-10
28036 Madrid (ES)**

(54) **SECONDARY BATTERY AND ELECTRICAL DEVICE**

(57)     A secondary battery and an electrical device are disclosed. The secondary battery includes a positive electrode plate and a negative electrode plate and satisfies $0.74 \leq (W_2/W_1)*CB \leq 1.03$. The CB value, charging energy, and discharging energy of the secondary battery satisfy the above-mentioned relationship, so that the secondary battery can have a higher energy density, a longer cycle life, and a better storage performance.

EP 4 383 391 A1

**Description**

This application claims priority to Chinese Patent Application No. 202211327756.8, filed with the Chinese Patent Office on October 27, 2022, entitled "SECONDARY BATTERY AND ELECTRICAL DEVICE", the disclosure of which is incorporated herein by reference in its entirety.

TECHNICAL FIELD

The present application relates to the field of energy storage devices, and more particular to a secondary battery and an electrical device.

BACKGROUND

New energy vehicles represent the direction of world vehicle industry development. As a novel high-voltage, high-energy-density rechargeable battery, a secondary battery has prominent characteristics such as light weight, high energy density, no pollution, no memory effect, long service life, and the like, and is widely applied to the field of new energy vehicles and energy storage technologies.

Currently, lithium ion secondary batteries are widely used in vehicles such as pure electric vehicles and plug-in hybrid electric vehicles. Considering the service life of the vehicles, a severe challenge is posed to the life of the battery. Existing lithium ion batteries are increasingly unable to meet the long-term requirements of vehicles. Therefore, how to further improve the cycle performance of the batteries becomes an important technical issue in the research and development of the secondary batteries.

SUMMARY

Technical problem

The present application provides a secondary battery and an electrical device, and aims to solve a problem of poor cycle life and storage performance of the existing secondary batteries.

Solution to Problem

Technical Solution

In one aspect, there is provided a secondary battery, including: a positive electrode plate including a positive current collector and a positive film disposed on at least one surface of the positive current collector, where the positive film includes a positive active material; and a negative electrode plate including a negative current collector and a negative film disposed on at least one surface of the negative current collector, where the negative film includes a negative active material; where the secondary battery satisfies $0.74 \leq (W_2/W_1)*CB \leq 1.03$; where $W_1$ is charging energy of the secondary battery, $W_2$ is discharging energy of the secondary battery, and $W_1$ and $W_2$ are in watt-hour; CB is a ratio of the capacity of the negative electrode plate per unit area to the capacity of the positive electrode plate per unit area.

Further, the secondary battery satisfies $0.92 \leq W_2/W_1$.

Further, the CB is in a range of $0.8 \leq CB \leq 1.08$.

Further, the positive active material includes $Li_xA_yFe_{(1-y)}PO_4$, where $0.8 \leq X \leq 1.2$, $0 \leq y < 1$, and an element A includes at least one of nickel, cobalt, manganese, magnesium, calcium, barium, titanium, or vanadium.

Further, the positive electrode plate includes a positive film, and the negative electrode plate includes a negative film; where the positive film has an area of $S_1$ m$^2$, the negative film has an area of $S_2$ m$^2$, and $S_1/S_2 \leq 0.995$ is satisfied for $S_1$ and $S_2$.

Further, the positive active material has a gram capacity of 130-159 mAh/g and the positive film has a surface density of 150-600 g/m$^2$.

Further, $S_1/S_2 \geq W_2/W_1$ is satisfied for $S_1/S_2$ and $W_2/W_1$.

Further, the secondary battery further includes an electrolyte including an organic solvent, where the organic solvent includes an unsaturated carbonate and/or a sulfur-oxygen double bond compound, the unsaturated carbonate includes vinylene carbonate and/or vinyl carbonate, the sulfur-oxygen double bond compound includes at least one of 1, 3 propane sultone, vinyl sulfate, 1, 4-butanesultone, vinyl sulfite, or methylene methanedisulfonate.

Further, based on a weight of the electrolyte, the unsaturated carbonate has a content of a%, the sulfur-oxygen double bond compound has a content of b%, and the secondary battery satisfies at least one of following features:

$$(I) \quad 0.1 \leq a+b \leq 7;$$

$$(II) \quad 0.1 \leq a/b \leq 10;$$

$$(III) \quad 0.05 \leq a \leq 3;$$

$$(IV) \quad 0.05 \leq b \leq 4;$$

$$(V) \quad 0.06 \leq a/CB \leq 3.75;$$

or

$$(VI) \quad 0.06 \leq b/CB \leq 5.0.$$

Further, the secondary battery has an actual CB' value of 1.10-1.30; where $0.88 \leq CB*CB' \leq 1.375$ is satisfied for CB and CB'.

In another aspect, another embodiment of the present application further provides an electrical device, including the secondary battery of any of embodiments described above, where the secondary battery serves as a power supply for the electrical device.

Advantageous effect of present disclosure

Advantageous effect

Compared with the prior art, the present application provides the secondary battery and the electrical device, where the secondary battery includes the positive electrode plate and the negative electrode plate and satisfies $0.74 \leq (W_2/W_1)*CB<1.03$. The CB value, charging energy, and discharging energy of the secondary battery satisfy the above-mentioned relationship, so that the secondary battery can have a higher energy density, a longer cycle life, and a better storage performance.

EMBODIMENTS OF INVENTION

DETAILED DESCRIPTION

Technical solutions in embodiments of the present application will be clearly and completely described below in the embodiments of the present application. Obviously, the described embodiments are only a part of embodiments of the present application, rather than all the embodiments. Based on the embodiments in the present application, all other embodiments obtained by those skilled in the art without creative work fall within the protection scope of the present application.

An embodiment of the present application provides a secondary battery, including: a positive electrode plate including a positive current collector and a positive film disposed on at least one surface of the positive current collector, where the positive film includes a positive active material; and a negative electrode plate including a negative current collector and a negative film disposed on at least one surface of the negative current collector, where the negative film includes a negative active material; where the secondary battery satisfies $0.74 \leq (W_2/W_1)*CB \leq 1.03$; where $W_1$ is charging energy of the secondary battery, $W_2$ is discharging energy of the secondary battery , and $W_1$ and $W_2$ are in watt-hour; CB is a ratio of the capacity of the negative electrode plate per unit area to the capacity of the positive electrode plate per unit area. In the present embodiment, the relationship between the CB value and the charging/discharging energy of the battery has a great influence on the performance of the battery. When the relationship of $0.74 \leq (W_2/W_1)*CB \leq 1.03$ is satisfied for the charging energy $W_1$, the discharging energy $W_2$, and the CB value of the secondary battery, the secondary battery has good cycle performance, fast charging capacity, and high energy density so that the secondary battery has higher energy efficiency and longer cycle life.

According to some embodiments of the present application, the positive active material has a gram capacity of 130-159 mAh/g and the positive film has a surface density of 150-600 $g/m^2$. Alternatively, a gram capacity of the positive active material may be any one of 133 mAh/g, 135 mAh/g, 143 mAh/g, 145 mAh/g, 153 mAh/g, 155 mAh/g, or 158 mAh/g, or in a range between any two values thereamong, and the surface density of the positive film may be any one of 155 $g/m^2$, 200 $g/m^2$, 255 $g/m^2$, 300 $g/m^2$, 355 $g/m^2$, 400 $g/m^2$, 455 $g/m^2$, 500 $g/m^2$, 555 $g/m^2$ or in a range between any two values thereamong. If the gram capacity of the positive active material is too small, the energy density of the secondary battery may be affected. If the gram capacity of the positive active material is too large, the stability of the positive active material may be affected, so that the stability is deteriorated, thereby affecting the cycle life of the secondary battery. If the surface density of the positive film is too small, the energy density of the secondary battery may be affected. If the surface density of the positive film is too large, the system power of the secondary battery may be deteriorated, thereby affecting the cycle life of the secondary battery. Therefore, the gram capacity of the positive active material and the surface density of the positive film are appropriate in the present embodiment, so that the positive electrode membrane can have a high capacity while having a high electron conduction performance, thereby facilitating improvement of the kinetic performance, cycle performance, storage performance and energy density of the battery.

In some embodiments of the present application, the negative active material has a gram capacity of 260-380 mAh/g. For example, the gram capacity of the negative active material may be any one of 265 mAh/g, 270 mAh/g, 275 mAh/g, 280 mAh/g, 285 mAh/g, 290 mAh/g, 295 mAh/g, 300 mAh/g, 315 mAh/g, 325 mAh/g, 335 mAh/g, 345 mAh/g, 355 mAh/g, 365 mAh/g, or 375 mAh/g, or in a range between any two values thereamong.

The surface density of the negative film is 80-290 $g/m^2$. Alternatively, the surface density of the negative film may be any one of 90 $g/m^2$, 100 $g/m^2$, 110 $g/m^2$, 120 $g/m^2$, 130 $g/m^2$, 140 $g/m^2$, 150 $g/m^2$, 160 $g/m^2$, 170 $g/m^2$, 180 $g/m^2$, 190 $g/m^2$, 200 $g/m^2$, 210 $g/m^2$, 220 $g/m^2$, 230 $g/m^2$, 240 $g/m^2$, 250 $g/m^2$, 260 $g/m^2$, 270 $g/m^2$, 280 $g/m2$, 285 $g/m^2$, 288 $g/m^2$, or in a range between any two values thereamong. In some embodiments of the present application, the secondary battery satisfies $0.92 \leq W_2/W_1$, and the CB is in a range of $0.8 \leq CB \leq 1.08$. By further defining the range of $W_2/W_1$ and CB, the cycle life and storage performance of the secondary battery is further improved while taking into account energy efficiency. In the present embodiment, $W_2/W_1$ is not greater than 1.15.

In some embodiments of the present application, the secondary battery has an actual CB' value of 1.10-1.30; where $0.88 \leq CB*CB' \leq 1.375$ is satisfied for the CB and CB'. As such, on the one hand, it can be ensured that the secondary battery does not plate lithium during charging of the secondary battery, thereby prolonging the cycle life and storage performance of the secondary battery, and on the other hand, a large amount of excess vacancies of intercalating lithium of the negative electrode in the operation process of the secondary battery can be avoided. It should be noted that the CB here is the design CB value and the CB' is an actually used CB value.

In some embodiments of the present application, a molecular formula of the positive active material includes $Li_xA_yFe_{(1-y)}PO_4$, where $0.8 \leq X \leq 1.2$, $0 \leq y < 1$, and an element A includes at least one of nickel, cobalt, manganese, magnesium, calcium, barium, titanium, or vanadium. For example, the positive active material includes one or more of $LiFePO_4$, $LiFe_{0.97}Co_{0.03}PO_4$, $LiFe_{0.98}Ti_{0.02}PO_4$, $LiFe_{0.995}Mg_{0.005}PO_4$, or $LiFe_{0.99}Mn_{0.01}PO_4$.

In some embodiments of the present application, the element A constitutes 0%-36% of the total weight of the positive active material. For example, a proportion of the element A in the total weight of the positive active material may be any one of 1%, 5%, 9%, 11%, 15%, 19%, 21%, 25%, 29%, 31%, or 35%, or in a range between any two values thereamong. The above-mentioned element A is mixed in the positive active material, so that a voltage platform of the secondary battery can be improved, and the energy density of the secondary battery can be improved.

In some embodiments of the present application, the positive film further includes an adhesive, a conductive agent, and a dispersant, where, based on the weight of the positive film, the positive active material is present in an amount of 80%-99%, the adhesive is present in an amount of 1%-6%, the conductive agent is present in an amount of 0%-20%, and the dispersant is present in an amount of 0%-8%. As such, the secondary battery can improve the system kinetics of the secondary battery, balance the rates of deintercalating lithium of the positive and negative electrode plates, inhibit excessive expansion of the negative electrode plate during intercalating lithium of the negative electrode plate, reduce the loss of the active lithium, and improve the cycle life while taking into account the energy density.

In some embodiments, the adhesive may be polyvinylidene difluoride (PVDF), the conductive agent may be a carbon material such as carbon black, and the dispersant may be polymethylpyrrolidone (PVP).

Therefore, when the positive and negative electrode plates include active materials in the above-mentioned range of gram capacity and the secondary battery satisfies $0.74 \leq (W_2/W_1)*CB \leq 1.03$, the positive electrode plate can be more effectively matched with the negative electrode plate, so that the secondary battery has a higher capacity, the capacity retention rate of the secondary battery during storage and cycle can be improved, and the electron conduction performance of the positive electrode plate can be further improved, thereby improving the power performance of the battery. Therefore, the secondary battery can be simultaneously compatible with the high energy density, the cycle performance, the storage performance, and the kinetic performance.

In the present embodiment, the positive film has an area of $S_1$ $m^2$, the negative film has an area of $S_2$ $m^2$, and $S_1/S_2 \leq 0.995$ is satisfied for S1 and S2. For example, $S_1/S_2$ may be any one of 0.702, 0.902, 0.922, 0.945, 0.955, 0.965, 0.975, or 0.985, or in a range between any two values thereamong. The above-described relationship is satisfied for $S_1$ and $S_2$, so that the negative electrode plate has enough lithium vacancies during the operation of the secondary battery, and lithium plating does not occur in the charging process of the secondary battery due to insufficient intercalating lithium vacancies of the negative electrode plate, thereby improving the cycle and stability performance of the secondary battery. In the present embodiment, the value of $S_1/S_2$ is not less than 0.70. When the value of $S_1/S_2$ is less than 0.70, the capacity of the battery can be affected.

In some embodiments, $S_1/S_2 \geq W_2/W_1$ is satisfied for $S_1/S_2$ and $W_2/W_1$. By limiting an area ratio between an area of the positive film and that of the negative film and a ratio of the discharging energy to the charging energy of the battery to the above-mentioned range, the energy density and the energy efficiency of the secondary battery can be effectively balanced, which improves the energy density of the secondary battery while ensuring the energy efficiency.

In another embodiment, the secondary battery further includes an electrolyte including an organic solvent, where the organic solvent includes an unsaturated carbonate and/or a sulfur-oxygen double bond compound. The unsaturated carbonate includes vinylene carbonate and/or vinyl carbonate. The sulfur-oxygen double bond compound includes at least one of 1, 3 propane sultone, vinyl sulfate, 1, 4-butanesultone, vinyl sulfite, or methylene methanedisulfonate.

Further, the unsaturated carbonate has a content of a%, the sulfur-oxygen double bond compound has a content of b%, and the secondary battery satisfies at least one of following features:

$$(I) \ 0.1{\leq}a{+}b{\leq}7;$$

$$(II) \ 0.1{\leq}a/b{\leq}10;$$

$$(III) \ 0.05{\leq}a{\leq}3;$$

$$(IV) \ 0.05{\leq}b{\leq}4;$$

$$(V) \ 0.06{\leq}a/CB{\leq}3.75;$$

$$(VI) \ 0.06{\leq}b/CB{\leq}5.0.$$

The value of a+b may be any one of 0.15, 0.55, 1.5, 1.55, 2.5, 2.55, 3.5, 3.55, 4.5, 4.55, or 7, or in a range between any two values thereamong. When the value of a+b is in the range of 0.1-5, the energy efficiency of the secondary battery can be improved while being compatible with the life.

The value of a/b may be any one of 1.2, 2, 2.2, 3, 3.2, 4, 4.2, 5, 5.2, 6, 6.2, or 7, 7.2, 8, 8.2, 9, or 9.2 or in a range between any two values thereamong. When the value of a/ b is in the range of 0.1-10, the energy efficiency of the secondary battery can be improved while being compatible with the life.

The value of a may be any one of 0.15, 0.55, 1, 1.15, 1.55, 2, 2.15, 2.55, 2.85, 4.55, or 2.95, or in a range between any two values thereamong. When the value of a is in the range of 0.1-3, the energy efficiency of the secondary battery can be improved while being compatible with the life.

The value of b may be any one of 0.15, 0.55, 1, 1.15, 1.55, 2, 2.15, 2.55, 3.15, 3.55, 3.85, or 3.95, or in a range between any two values thereamong. When the value of b is in the range of 0.1-4, the energy efficiency of the secondary battery can be improved while being compatible with the life.

In one implementation, the value of a/CB may be any one of 0.06, 0.15, 0.55, 1.5, 1.55, 2.5, 2.55, 2.65, 2.75, 2.85, 2.95, 3, or 3.75, or in a range between any two values thereamong. When the value of a/CB is in the range of 0.06-3.75, the energy efficiency of the secondary battery can be improved while being compatible with the life.

The value of b/CB may be any one of 0.15, 0.55, 1.5, 1.55, 2.5, 2.55, 3.5, 3.55, 4.1, 4.15, 4.2, or 4.25, or 5.0, or in a range between any two values thereamong. When the value of b/CB is in the range of 0.06-5, the energy efficiency of the secondary battery can be improved while being compatible with the life.

In the present embodiment, the positive electrode plate and the negative electrode plate are immersed in an electrolyte, and lithium ions are moved back and forth between the positive electrode plate and the negative electrode plate by using the electrolyte as a medium to realize charging and discharging of the battery. In order to avoid short-circuiting of the positive and negative electrodes through the electrolyte, it is necessary to separate the positive and negative electrode plates with a separation film. For example, the secondary battery may have an aluminum shell as a housing, or may be a pouch battery. The separation film may be selected from polyethylene films, polypropylene films, polyvinylidene fluoride films, and multilayer composite films thereof.

The present application is further described in detail below in connection with specific embodiments, which are not to be construed as limiting the scope of the present application as claimed.


Example 1

A method of preparing a secondary battery is provided, specifically including:

1) stacking the positive electrode plate, the separation film, and the negative electrode plate in sequence so that the separation film is disposed between the positive electrode plate and the negative electrode plate for separation.
2) winding an assembly of the positive electrode plate, the separation film, and the negative electrode plate that are stacked into a nude cell; and
3) placing the nude cell into a packaging shell, and injecting the electrolyte into the packaging shell, and performing vacuum packaging, standing, formation, shaping, and the like, to obtain the secondary battery.


Preparation of the positive electrode plate is performed by:
uniformly mixing the positive active material of $LiFePO_4$, the conductive agent of super pll (SP), the adhesive of PVDF, and the dispersant of PVP in a weight ratio of 97: 0.7: 2.2: 0.1 in N-methylpyrrolidone (NMP) to form positive paste; coating the positive paste onto both surfaces of an aluminum foil of the positive current collector; and performing baking, cold pressing, slitting, and slicing for the aluminum foil to obtain a positive electrode plate.
Preparation of the negative electrode plate is performed by:
uniformly mixing the negative active material of graphite, the conductive agent of super pll (SP), the dispersant, i.e., carboxymethylcellulose (CMC), and the adhesive, i.e., styrene butadiene rubber (SBR) in a weight ratio of 96.3: 0.7: 1.1: 1.9 to form uniform negative paste; and coating the negative paste onto both surfaces of a copper into the water to mix the mixture well, and coating the mixture onto two surfaces of a copper foil of the negative current collector; and, performing slitting and slicing for the copper foil to obtain a negative electrode plate.
Preparation of the electrolyte is performed by:
mixing ethylene carbonate (EC), methyl ethyl carbonate (EMC) and diethyl carbonate (DEC) of organic solvents in a mass ratio of 1:1:1. In an argon atmosphere glovebox having a water content of < 10ppm, the dried $LiPF_6$ lithium salt is dissolved in the above described organic solvents, and vinylidene carbonate (VC) and 1,3 propane sultone (PS) are added and uniformly mixed in the organic solvents to obtain an electrolyte, where the VC content is 1.5% of the total weight of the electrolyte and the PS content is 2% of the total weight of the electrolyte. The concentration of $LiPF_6$ in the electrolyte is 1 mol/L.
Separation film is selected from
a polyethylene (PE) film or a polypropylene (PP) film.

Test portion:

1. Test for an energy efficiency value of $W_2/W_1$ is performed by following operations.

The secondary battery is charged to the nominal capacity of the battery at a constant current of 1C, i.e., the charging energy is $E_1$.
Standing for 30 min.
The secondary battery is discharged to a lower limit of voltage of 2.5 V at a constant current of 1C, i.e., the discharging capacity is $W_2$, where
the energy efficiency value is $W_2/W_1$.

2. Capacity excess coefficient CB value test for the secondary battery

Positive reversible capacity test is performed by taking and cutting a single-sided coated positive electrode plate into a wafer with a diameter of 14mm, weighing the wafer, and subtracting the mass of the positive current collector from the mass of the water to obtain the mass Mc of the positive film in an unit of mg. The electrolyte prepared as described above is used in a button battery assembled in the glovebox, in which lithium metal wafers are used as counter electrodes. After standing at 25°C for 6 h, the battery is charged at a constant current of 0.1C rate to 4.25V, then charged at a constant current of 0.05C rate to 4.25V, then standing for 5 minutes, and discharged at a constant current of 0.1C rate to 2.8V. The discharging capacity is denoted as Cc in an unit of mAh.

Negative reversible capacity test is performed by taking and cutting a single-sided coated negative electrode plate into a wafer with a diameter of 14mm, weighing the wafer, and subtracting the mass of the negative current collector from the mass of the water to obtain the mass Ma of the negative film in an unit of mg. The electrolyte prepared as described above is used in a button battery assembled in the glovebox, in which lithium metal wafers are used as counter electrodes. After standing at 25°C for 6 h, the battery is discharged at a constant current of 0.1C rate to 5mV, then discharged at a constant current of 0.01C rate to 5mV, then standing for 5 minutes, and charged at a constant current of 0.1C rate to 0.7V. The charging capacity is denoted as Ca in an unit of mAh.

After obtaining the discharging capacity Cc of the positive electrode and the charging capacity Ca of the negative electrode, the capacity excess coefficient CB of the battery is calculated from CB=Ca/Cc.

3. Cycle life test for the secondary battery

The lithium ion secondary batteries prepared in Examples and Comparative Examples are charged to nominal capacity at a constant capacity of 1C rate and discharged to 2.5V at 1C rate at 25°C, and cyclically tested until the capacity of each of the lithium ion secondary batteries is decayed to 80% of the initial capacity to record the number of cycles.

**4.** Storage life test for the secondary battery

The lithium ion secondary batteries prepared in Examples and Comparative Examples are charged to nominal capacity at 1C rate and discharged to 2.5 V at 1C rate at 25°C to obtain an initial capacity of the battery. After the battery is fully charged at 1C rate, the battery is stored in a thermostat at 60°C, until the capacity of each of the lithium ion secondary batteries is decayed to 80% of the initial capacity to record days of storage.

5. Lithium plating test for the battery

The lithium ion secondary batteries prepared in Examples and Comparative Examples are charged to nominal capacity at 1C rate and discharged to 2.5V at 1C rate at 25°C. After 10 cycles are performed for the above operation, the lithium ion secondary battery is fully charged to the nominal capacity at 1C, and then the negative electrode plate is disassembled from the secondary battery, and the flatness and the lithium plating on the surface of the negative electrode plate are observed. If an area of a lithium plating region on the surface of the negative electrode plate is greater than or equal to 1% and less than 5% of the area of the surface of negative electrode plate, it is considered to be slight lithium plating. If the area of the lithium plating region on the surface of the negative electrode plate is in a range of 5% to 40% of the area of the surface of negative electrode plate, it is considered to be serious lithium plating.

Example 2-21 and Comparative Examples 1-3

The process of preparing the secondary battery and the performance test are the same as Example 1 except that electrode plate parameters in the preparation process are adjusted to prepare secondary batteries with different performance. different electrode plate parameters are specifically shown in Table 1.

Examples 22-35

The process of preparing the secondary battery and the performance test are the same as Example 1 except that additive addition parameters in the preparation process are adjusted to prepare secondary batteries with different performance. Different electrolyte parameters are specifically shown in Table 2.

Coating weights of the positive paste and the negative paste are adjusted to control different CB values. The charging capacity of the secondary battery is adjusted to control different CB' values. Coating areas of the positive paste and the negative paste on the current collectors are adjusted to obtain different areas $S_1$ and $S_2$ of the positive and negative films. The addition amounts of ethylene carbonate and 1, 3-propanesultone are adjusted to obtain different content a% of the unsaturated carbonate and different content b% of the sulfur-oxygen double bond compound.

Relevant parameters and test results of the secondary batteries of Examples 1-35 and Comparative Examples 1 to 3 prepared according to the above method, respectively, are recorded in Tables 1 to 3, wherein the K value in Table 1 is expressed as: $K=(W_2/W_1) \cdot CB$.

Table 1

[]

[Table 1]

| Number | Positive active material | $W_2$ | $W_1$ | $S_1$ | $S_2$ | CB | CB' | K | CB* CB' | $W_2/W_1$ | $S_1/S_2$ |
|---|---|---|---|---|---|---|---|---|---|---|---|
| Example 1 | $LiFePO_4$ | 335 | 362 | 2.03 | 2.04 | 0.8 | 1.16 | 0.74 | 0.92 8 | 0.92 5 | 0.995 |
| Example 2 | $LiFePO_4$ | 334 | 359 | 2.03 | 2.04 | 0.85 | 1.16 | 0.79 | 0.98 6 | 0.93 | 0.995 |
| Example 3 | $LiFePO_4$ | 334 | 357 | 2.03 | 2.04 | 0.9 | 1.16 | 0.84 | 1.04 4 | 0.93 5 | 0.995 |
| Example 4 | $LiFePO_4$ | 335 | 356 | 1.95 | 2.04 | 0.95 | 1.16 | 0.89 | 1.10 2 | 0.94 | 0.955 |
| Example 5 | $LiFePO_4$ | 334 | 353 | 2.03 | 2.04 | 1 | 1.16 | 0.95 | 1.16 0 | 0.94 5 | 0.995 |
| Example 6 | $LiFePO_4$ | 335 | 353 | 2.03 | 2.04 | 1.08 | 1.16 | 1.03 | 1.25 3 | 0.95 | 0.995 |
| Example 7 | $LiFePO_4$ | 335 | 362 | 1.91 | 2.04 | 0.8 | 1.1 | 0.74 | 0.88 0 | 0.92 5 | 0.935 |
| Example 8 | $LiFePO_4$ | 334 | 361 | 1.89 | 2.04 | 0.8 | 1.15 | 0.74 | 0.92 0 | 0.92 5 | 0.929 |
| Example 9 | $LiFePO_4$ | 335 | 362 | 1.97 | 2.04 | 0.8 | 1.2 | 0.74 | 0.96 0 | 0.92 5 | 0.965 |
| Example 10 | $LiFePO_4$ | 335 | 362 | 2.03 | 2.04 | 0.8 | 1.25 | 0.74 | 1.00 0 | 0.92 5 | 0.995 |
| Example 11 | $LiFePO_4$ | 335 | 362 | 2.03 | 2.04 | 0.8 | 1.3 | 0.74 | 1.040 | 0.925 | 0.995 |
| Example 12 | $LiFePO_4$ | 335 | 362 | 2.03 | 2.08 | 0.8 | 1.16 | 0.74 | 0.92 8 | 0.92 5 | 0.976 |
| Example 13 | $LiFePO_4$ | 335 | 362 | 2.03 | 2.06 | 0.8 | 1.16 | 0.74 | 0.92 8 | 0.92 5 | 0.985 |
| Example 14 | $LiFePO_4$ | 335 | 362 | 2.03 | 2.09 | 0.8 | 1.16 | 0.74 | 0.92 8 | 0.92 5 | 0.971 |
| Example 15 | $LiFePO_4$ | 335 | 362 | 2.03 | 2.12 | 0.8 | 1.16 | 0.74 | 0.92 8 | 0.92 5 | 0.957 |
| Example 16 | $LiFePO_4$ | 335 | 362 | 2.03 | 2.15 | 0.8 | 1.16 | 0.74 | 0.92 8 | 0.92 5 | 0.944 |
| Example 17 | $LiFe_{0.98}Ti_{0.02}PO_4$ | 335 | 362 | 2.03 | 2.04 | 0.8 | 1.16 | 0.74 | 0.92 8 | 0.92 5 | 0.995 |
| Example 18 | $LiFe_{0.97}Co_{0.03}PO_4$ | 335 | 362 | 2.03 | 2.04 | 0.8 | 1.16 | 0.74 | 0.92 8 | 0.92 5 | 0.995 |
| Example 19 | $LiFe_{0.995}Mg_{0.005}PO_4$ | 335 | 362 | 2.03 | 2.04 | 0.8 | 1.16 | 0.74 | 0.92 8 | 0.92 5 | 0.995 |
| Example 20 | $LiFe_{0.99}Ni_{0.01}PO_4$ | 335 | 362 | 2.03 | 2.04 | 0.8 | 1.16 | 0.74 | 0.92 8 | 0.92 5 | 0.995 |
| Example 21 | $LiFe_{0.99}Mn_{0.01}PO_4$ | 335 | 362 | 2.03 | 2.04 | 0.8 | 1.16 | 0.74 | 0.92 8 | 0.92 5 | 0.995 |
| Comparati ve Example 1 | $LiFePO_4$ | 320 | 368 | 2.03 | 2.03 | 0.79 | 1.09 | 0.69 | 0.86 1 | 0.87 | 1 |
| Comparati ve Example 2 | $LiFePO_4$ | 379 | 368 | 2.03 | 2.03 | 1.11 | 1.4 | 1.14 | 1.4 | 1.03 | 1 |
| Comparati ve Example 3 | $LiFePO_4$ | 318 | 362 | 2.04 | 1.73 4 | 0.74 | 1.16 | 0.65 | 0.85 8 | 0.88 | 0.85 |

Table 2

[]

[Table 2]

| Number | a | b | a+b | a/b | a/CB | b/CB |
|---|---|---|---|---|---|---|
| Example 1 | 1.5 | 2 | 3.5 | 0.75 | 1.9 | 2.5 |
| Example 22 | 0.05 | 0.05 | 0.1 | 1.00 | 0.06 | 0.06 |
| Example 23 | 0.5 | 1 | 1.5 | 0.50 | 0.63 | 1.25 |
| Example 24 | 1 | 2 | 3 | 0.50 | 1.25 | 2.50 |
| Example 25 | 2 | 3 | 5 | 0.67 | 2.50 | 3.75 |
| Example 26 | 3 | 4 | 7 | 0.75 | 3.75 | 5.00 |
| Example 27 | 3 | 4 | 7 | 0.75 | 3.75 | 5.00 |
| Example 28 | 3 | 4 | 7 | 0.75 | 3.75 | 5.00 |
| Example 29 | 3 | 4 | 7 | 0.75 | 3.75 | 5.00 |
| Example 30 | 3 | 4 | 7 | 0.75 | 3.75 | 5.00 |
| Example 31 | 3 | 4 | 7 | 0.75 | 3.75 | 5.00 |
| Example 32 | 0.4 | 0.04 | 0.44 | 10.00 | 0.51 | 0.05 |
| Example 33 | 3.1 | 4.1 | 7.2 | 0.76 | 2.79 | 3.69 |
| Example 34 | 0 | 3.5 | 3.5 | 0 | 0 | 4.37 |
| Example 35 | 2.5 | 0 | 2.5 | 0 | 3.125 | 0 |

Table 3

[]

[Table 3]

| Number | Cycle life (the number of cycle) | Storage life (the number of days) | Lithium plating test results |
|---|---|---|---|
| Example 1 | 8632 | 876 | No lithium plating |
| Example 2 | 8641 | 883 | No lithium plating |
| Example 3 | 8990 | 902 | No lithium plating |
| Example 4 | 9660 | 910 | No lithium plating |
| Example 5 | 8879 | 885 | No lithium plating |
| Example 6 | 7007 | 667 | Slight lithium plating |
| Example 7 | 8412 | 746 | No lithium plating |
| Example 8 | 8510 | 799 | No lithium plating |
| Example 9 | 8723 | 910 | No lithium plating |
| Example 10 | 8654 | 837 | No lithium plating |
| Example 11 | 8318 | 754 | No lithium plating |
| Example 12 | 8316 | 815 | No lithium plating |
| Example 13 | 8614 | 843 | No lithium plating |
| Example 14 | 8934 | 857 | No lithium plating |

(continued)

| Number | Cycle life (the number of cycle) | Storage life (the number of days) | Lithium plating test results |
|---|---|---|---|
| Example 15 | 8788 | 832 | No lithium plating |
| Example 16 | 8258 | 810 | No lithium plating |
| Example 17 | 8664 | 877 | No lithium plating |
| Example 18 | 8646 | 880 | No lithium plating |
| Example 19 | 8656 | 880 | No lithium plating |
| Example 20 | 8652 | 882 | No lithium plating |
| Example 21 | 8677 | 883 | No lithium plating |
| Comparative Example 1 | 3952 | 324 | Medium lithium plating |
| Comparative Example 2 | 2532 | 246 | Medium lithium plating |
| Comparative Example 3 | 2498 | 235 | Medium lithium plating |
| Example 22 | 8613 | 854 | No lithium plating |
| Example 23 | 8621 | 866 | No lithium plating |
| Example 24 | 8615 | 845 | No lithium plating |
| Example 25 | 8629 | 859 | No lithium plating |
| Example 26 | 8610 | 849 | No lithium plating |
| Example 27 | 8608 | 853 | No lithium plating |
| Example 28 | 8605 | 847 | No lithium plating |
| Example 29 | 8622 | 834 | No lithium plating |
| Example 30 | 8601 | 840 | No lithium plating |
| Example 31 | 8609 | 831 | No lithium plating |
| Example 32 | 7486 | 669 | No lithium plating |
| Example 33 | 7789 | 699 | No lithium plating |
| Example 34 | 6658 | 615 | No lithium plating |
| Example 35 | 6612 | 611 | No lithium plating |

**As** can be seen from Examples 1-35 and Comparative Examples 1 to 3 in Table 1 to 3 that, when $K=(W_2/W_1)*CB$ is in the range of 0.74-1.03 and the CB value is in the range of 0.8-1.08, the positive electrode of the secondary battery has sufficient lithium to supplement active lithium loss of the secondary battery during the operation of the secondary battery, so that the battery has good cycle life, storage performance and kinetic performance at the same time, and when the K value is in the range of 0.84-0.95, the battery has better cycle life and storage performance, and when the K value is less than 0.74 or greater than 1.03, the cycle performance and the storage performance of the battery are significantly decreased, and medium lithium plating occurs.

As can be seen from Examples 7-11 in Tables 1 to 3 that, in the course of increasing the actually used CB value, i.e., the CB', from 1.1 to 1.3, there is a tendency for the cycle and storage life of the secondary battery to increase first and then decrease. Because the CB' is increased, a depth of deintercalation lithium of the negative electrode of the secondary battery is decreased during the operation of the secondary battery, the expansion of the negative electrode is reduced, and a new interface generated by the expansion of the negative electrode is reduced, whereby the consumption of the active lithium due to the generation of an Solid Electrolyte Interphase (SEI) at the new interface can be reduced, and therefore the life of the secondary battery is increased. However, when the CB' is excessively large, the content of the negative active substance is excessively high, the interface is increased, and the consumption of the active lithium due to the generation of the SEI at the interface is increased, so that the cycle and storage life begin to decrease.

As can be seen from Examples 17-21 in Tables 1 to 3 that, when a small amount of elements Ti, Co, Mg, Ni, and Mn are doped in the positive electrode material, the cycle and storage life of the secondary battery are increased. Because the voltage plateau of the secondary battery is increased after the elements are doped, the system dynamics of the secondary battery is slightly deteriorated, and the rate of a side reaction during charging and discharging of the secondary battery is also decreased, so that the cycle and storage performance is also slightly improved.

**K** values (i.e., $(W_2/W_1)*CB$) of the batteries of Comparative Examples 1 to 3 in Table 1 are not within the given range (0.74-1.03), and the cycle life, storage life, or kinetic performance of the batteries cannot be considered simultaneously. Therefore, the secondary battery provided in the present embodiment can satisfy both high energy efficiency and long life.

It can be seen from the data in Tables 2-3 that the addition of the unsaturated carbonate and the thiooxy double bond compound can further improve the overall performance of the secondary battery, and the performance of the secondary battery is better when the unsaturated carbonate and the thiooxy double bond compound are included in the battery at the same time.

Another embodiment of the present application further provides an electrical device, including the secondary battery of any of embodiments described above, where the secondary battery serves as a power supply for the electrical device. The electrical device may be, but not limited to, a mobile device (e.g., a mobile phone, a notebook computer, etc.), an electric vehicle (e.g., a pure electric vehicle, a hybrid electric vehicle, an electric plug-in hybrid electric vehicle, an electric bicycle, an electric scooter, an electric golf cart, an electric truck, etc.), an electric train, a ship and a satellite, an energy storage system, etc.

The secondary battery and electrical device provided in the embodiments of the present application are described in detail above. In this specification, principles and implementations of the present application are illustrated by applying specific examples herein. The description of the above embodiments is only used to help understand the technical solutions and core ideas of the present application; those of ordinary skill in the art should understand that it is still possible to modify the technical solutions recorded in the foregoing embodiments, and these modifications or replacements do not cause the essence of the corresponding technical solutions to deviate from the scope of the technical solutions of the embodiments of the present application.

**Claims**

1. A secondary battery, comprising:

   a positive electrode plate comprising both a positive current collector and a positive film disposed on a surface of the positive current collector, wherein the positive film comprises a positive active material; and
   a negative electrode plate comprising both a negative current collector and a negative film disposed on a surface of the negative current collector, wherein the negative film comprises a negative active material;
   wherein the secondary battery satisfies $0.74 \leq (W_2/W_1)*CB \leq 1.03$;
   wherein $W_1$ is charging energy of the secondary battery, $W_2$ is discharging energy of the secondary battery, and $W_1$ and $W_2$ are in watt-hour; and
   wherein the Cell balance (CB) is a ratio of the capacity of the negative electrode plate per unit area to the capacity of the positive electrode plate per unit area.

2. The secondary battery of claim 1, wherein the secondary battery satisfies $0.92 \leq W_2/W_1$.

3. The secondary battery of claim 1, wherein the CB is in a range of $0.8 \leq CB \leq 1.08$.

4. The secondary battery of claim 1, wherein the positive active material comprises $Li_xA_yFe_{(1-y)}PO_4$, and wherein $0.8 \leq X \leq 1.2$, $0 \leq y < 1$, and an element A comprises at least one of nickel, cobalt, manganese, magnesium, calcium, barium, titanium, or vanadium.

5. The secondary battery of claim 1, wherein the positive film has an area of $S_1$ m$^2$, the negative film has an area of $S_2$ m$^2$, and $S_1/S_2 \leq 0.995$ is satisfied for $S_1$ and $S_2$.

6. The secondary battery of claim 5, wherein $S_1/S_2 \geq W_2/W_1$ is satisfied for $S_1/S_2$ and $W_2/W_1$.

7. The secondary battery of claim 5, wherein the positive active material has a gram capacity of 130-159 mAh/g and the positive film has a surface density of 150-600 g/m$^2$.

8. The secondary battery of any of claims 1-7, wherein the secondary battery further comprises an electrolyte comprising an organic solvent, and wherein the organic solvent comprises an unsaturated carbonate and a sulfur-oxygen double bond compound;

    the unsaturated carbonate comprises at least one of vinylene carbonate and vinyl carbonate; and
    the sulfur-oxygen double bond compound comprises at least one of 1, 3 propane sultone, vinyl sulfate, 1, 4-butanesultone, vinyl sulfite, or methylene methanedisulfonate.

9. The secondary battery of claim 8, wherein, based on a weight of the electrolyte, the unsaturated carbonate has a content of a%, the sulfur-oxygen double bond compound has a content of b%, and the secondary battery satisfies at least one of following features:

$$(I)\ 0.1 \leq a+b \leq 7;$$

$$(II)\ 0.1 \leq a/b \leq 10;$$

$$(III)\ 0.05 \leq a \leq 3;$$

$$(IV)\ 0.05 \leq b \leq 4;$$

$$(V)\ 0.06 \leq a/CB \leq 3.75;$$

or

$$(VI)\ 0.06 \leq b/CB \leq 5.0.$$

10. The secondary battery of claim 1, wherein the secondary battery has an actual CB' value of 1.10-1.30; and $0.88 \leq CB*CB' \leq 1.375$ is satisfied for CB and CB'.

11. An electrical device, comprising the secondary battery of any of claims 1-10, wherein the secondary battery serves as a power supply for the electrical device.

## INTERNATIONAL SEARCH REPORT

| International application No. |
| --- |
| **PCT/CN2022/144292** |

**A. CLASSIFICATION OF SUBJECT MATTER**

H01M10/0525(2010.01)i; H01M10/058(2010.01)i; H01M4/13(2010.01)i

According to International Patent Classification (IPC) or to both national classification and IPC

**B. FIELDS SEARCHED**

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 电池, 正极, 阴极, 负极, 阳极, 能量, 容量, 面积, batter+, cell?, positive, electrode, cathode, negative, anode, power, capacity, area

**C. DOCUMENTS CONSIDERED TO BE RELEVANT**

| Category* | Citation of document, with indication, where appropriate, of the relevant passages | Relevant to claim No. |
| --- | --- | --- |
| PX | CN 115498247 A (SUNWODA ELECTRIC VEHICLE CELL CO., LTD.) 20 December 2022 (2022-12-20)<br>description, paragraphs 5-22 | 1-11 |
| X | CN 113437250 A (NINGDE AMPEREX TECHNOLOGY LTD.) 24 September 2021 (2021-09-24)<br>description, paragraphs 0003-0131 | 1-5, 7, 11 |
| Y | CN 113437250 A (NINGDE AMPEREX TECHNOLOGY LTD.) 24 September 2021 (2021-09-24)<br>description, paragraphs 0003-0131 | 8-11 |
| Y | CN 105609874 A (DONGGUAN AMPEREX TECHNOLOGY LTD.) 25 May 2016 (2016-05-25)<br>description, paragraphs 0002-0133 | 8-11 |
| A | CN 107768727 A (JIANGSU HIGHSTAR BATTERY MANUFACTURING CO., LTD.) 06 March 2018 (2018-03-06)<br>entire document | 1-11 |

☑ Further documents are listed in the continuation of Box C.    ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| Date of the actual completion of the international search<br><br>**19 June 2023** | Date of mailing of the international search report<br><br>**23 June 2023** |
| Name and mailing address of the ISA/CN<br><br>**China National Intellectual Property Administration (ISA/CN)**<br>**China No. 6, Xitucheng Road, Jimenqiao, Haidian District, Beijing 100088** | Authorized officer<br><br><br><br>Telephone No. |

Form PCT/ISA/210 (second sheet) (July 2022)

**INTERNATIONAL SEARCH REPORT**

International application No.

**PCT/CN2022/144292**

### C.    DOCUMENTS CONSIDERED TO BE RELEVANT

| Category* | Citation of document, with indication, where appropriate, of the relevant passages | Relevant to claim No. |
|---|---|---|
| A | CN 109273771 A (NINGDE CONTEMPORARY AMPEREX TECHNOLOGY CO., LTD.) 25 January 2019 (2019-01-25) entire document | 1-11 |
| A | CN 111934027 A (DONGGUAN CHAM BATTERY TECHNOLOGY CO., LTD.) 13 November 2020 (2020-11-13) entire document | 1-11 |
| A | JP 2016091927 A (HITACHI CHEMICAL CO., LTD.) 23 May 2016 (2016-05-23) entire document | 1-11 |

Form PCT/ISA/210 (second sheet) (July 2022)

**INTERNATIONAL SEARCH REPORT**
Information on patent family members

International application No.

**PCT/CN2022/144292**

| Patent document cited in search report | | | Publication date (day/month/year) | Patent family member(s) | Publication date (day/month/year) |
|---|---|---|---|---|---|
| CN | 115498247 | A | 20 December 2022 | None | |
| CN | 113437250 | A | 24 September 2021 | None | |
| CN | 105609874 | A | 25 May 2016 | None | |
| CN | 107768727 | A | 06 March 2018 | None | |
| CN | 109273771 | A | 25 January 2019 | None | |
| CN | 111934027 | A | 13 November 2020 | None | |
| JP | 2016091927 | A | 23 May 2016 | None | |

Form PCT/ISA/210 (patent family annex) (July 2022)

## REFERENCES CITED IN THE DESCRIPTION

**Patent documents cited in the description**

- CN 202211327756